# EUROPEAN PATENT APPLICATION

(11) **EP 3 228 502 A1**
(43) Date of publication of application: **11.10.2017**
(21) Application number: 16164175.8
(22) Date of filing: 07.04.2016
(51) Int. Cl.: B60Q 3/00, G01J 3/02, G01J 3/46, H05B 33/08, B60Q 3/80, B60Q 3/85

(54) **VEHICLE LIGHTING APPARATUS**

(71) Applicant: Lisa Dräxlmaier GmbH, 84137 Vilsbiburg (DE)
(72) Inventor: Krzysztof, Olek, 44100 Gliwice (PL)

(57) **Abstract**

A vehicle lighting apparatus (1) comprises a lighting unit (2) to light a vehicle's interior with light (La) having a variable colour point and an electronic control unit (3) to control the at least one lighting unit (2) including its colour point, wherein the electronic control unit (3) comprises an interface (4) connectable to a colour sensing unit (5) and is adapted to set the colour point of the lighting unit (2) according to a sensed colour point. A vehicle (V) comprises the vehicle lighting apparatus. A method for setting a colour point of an interior light (La) of a vehicle (V) comprises sensing a colour point of a reference object (RO) and setting the colour point of the interior light (La) to a colour point closest to the sensed colour point. The invention is particularly useful for setting a colour point of an interior ambient light of a vehicle.

## Description

The invention relates to a vehicle lighting apparatus, comprising at least one colour-tunable lighting unit to light a vehicle's interior with light and an electronic control unit to control the at least one lighting unit including its colour point. The invention also relates to a vehicle comprising such a vehicle lighting apparatus. The invention further relates to a method for setting a colour point of an interior light of a vehicle. The invention is particularly useful for setting a colour point of an interior ambient light of a vehicle.

Modern cars offer an increasing number of comfort features, one example being RGB LED-based car interior lighting. With this kind of lighting, RGB modules placed inside the car can communicate with an on-board computer via a LIN bus. The RGB modules typically use light emitting diodes (LEDs) of different colours like red, green and blue to create a mixed light. A colour point or colour of the mixed light can be varied or tuned by changing a ratio of the underlying colour components, e.g. by setting an amplitude or a duty cycle of the respective LED drive signals.

Known RGB LED-based car interior lighting systems use colour points or colours from a predefined colour palette. A limitation of this is that the colour palette is unchangeable and may contain a few to hundreds of pre-defined colours. Especially for users who want to be able to highly personalize their interior lighting in an easy manner, this can be considered a shortcoming. For example, having only a few colours in a pre-defined colour palette may not give a good match with the desired colour while finding just the right colour out of hundreds of possible colours of a large palette may also be awkward.

It is the **object** of the present invention to at least partially overcome the problems associated with the prior art. It is a particular object of the present invention to improve setting a colour point of a vehicle's interior light in a particularly easy manner.

The object is achieved according to the features of the independent claims. Advantageous embodiments can be found, e.g., in the dependent claims and/or in the description.

The object is achieved by a vehicle lighting apparatus, comprising at least one colour-tunable lighting unit to light a vehicle's interior with light and an electronic control unit to control the at least one lighting unit including its colour point, wherein the electronic control unit comprises an interface connectable to a colour sensing unit and is adapted to set the colour point of the at least one lighting unit according to a colour point sensed by the colour sensing unit.

This vehicle lighting apparatus gives the advantage that a desired colour point of the interior light can be determined and set in a particularly easy manner since manual browsing of the colour palette of the lighting unit can be avoided. Rather, the colour point of the lighting unit is set automatically after a user has sensed a reference object or sample of this colour by using the colour sensing unit. Also enabled is an increased flexibility of interior lighting capabilities.

In the following, the colour point may also simply be called the colour. The colour point may be represented by a vector in colour space and may comprise at least two colour coordinates.

The vehicle may be a motor vehicle like a passenger car, a bus, a lorry or truck, etc. The vehicle may also be an airplane, a helicopter, etc. The vehicle may also be a ship, etc.

That the lighting unit is colour-tunable comprises that the lighting unit can tune or vary a colour point of the light emitted from it. Setting the colour point of the lighting unit thus means setting the (variable) colour point of the light emitted or emittable from the lighting unit.

The lighting unit may in particular be an ambient lighting unit or system to light the vehicle's interior by ambient light. It may thus also be called an interior lighting unit.

The at least one lighting unit may comprise at least two LEDs of different colour, i.e. emitting light of different single colours. However, the lighting unit may comprise LEDs with more than two colours, e.g. LEDs with the colours red, green, and blue or with the colours red, orange/amber, green, and blue etc. The mixed light may in particular be set to a white colour or colour point. The at least one lighting unit may further comprise at least one driver to drive the LEDs. The at least one lighting unit may be an LED module, also called a "colour tunable LED".

The electronic control unit may comprise a processor like a microcontroller, ASIC, FPGA, etc. The electronic control unit may be an on-board computer or a central control unit of the vehicle.

The colour sensing unit may be adapted to sense, probe, detect or measure a colour or colour point of an area or point (pixel) within its field of vision. Thus, the colour sensing unit may sense the colour of an object (e.g. a book cover, clothing, nail polish etc.) brought into this area. To this effect, the colour sensing unit may comprise at least one colour sensor. The at least one colour sensor may be assigned at least one optical element like a lens etc. The sensed colour point may be transferred to the electronic control unit via the interface. The electronic control unit may then control the at least one lighting unit to set its colour point accordingly. Thus, the colour sensed by the colour sensing unit may be used as an input for the at least one lighting unit.

Sensing the colour may comprise directly sensing the colour components used by the lighting unit. Sensing the colour may also comprise transforming the sensed colour components into colour components, e.g. between different RGB colour spaces or between a RGB colour space and a CMY colour space etc. The colour space transformation may be performed by the colour sensing unit or by the electronic control unit.

The colour sensing unit may be a dedicated module which may be independently handled by a user.

A unit may be a distributed unit or may be a locally confined unit, e.g. a module. A unit may be separately housed, or two or more units may be housed in a common housing.

It is an embodiment that at least one colour sensing unit is attached to the vehicle. This gives the advantage that a user does not have to provide a colour sensing unit. The colour sensing unit may thus be a part of the vehicle lighting apparatus. In one variant at least one colour sensing unit is placed at a fixed position within the vehicle. Alternatively or additionally, at least one colour sensing unit is withdrawable from a seating of the vehicle which may facilitate positioning the colour sensing unit with respect to the object to be sensed or measured (i.e., the reference object). The withdrawable colour sensing unit may be attached to the vehicle by a cord, cable, etc.

The colour sensing unit may e.g. be placed in the middle of a dashboard (e.g. near an on-board computer display), near a radio, close to a gear stick or between a driver seat and a passenger seat. Such a placing gives the advantage that the colour sensing unit is easily accessible by a driver and a front seat passenger. Alternatively or additionally, a colour sensing unit may be placed on an edge of the dashboard, near a door, or on a door itself, etc. This may facilitate its use by a nearest person.

It is an embodiment that at least one colour sensing unit is a portable device. This enables a particular comfortable positioning of the colour sensing unit with respect to the reference object. The portable device may be a dedicated device of the vehicle lighting apparatus, e.g. a module. The portable device may also be a personal device like a mobile phone, tablet computer etc. if the personal device comprises a built-in colour sensor.

It is a variant that a colour point can be sent to a personal device, e.g. to be displayed on that personal device.

It is an embodiment that the colour sensing unit is connected to the electronic control unit via a wired data connection. This enables a particularly fast and reliable data connection. The wired data connection may comprise a data cable, e.g. a data bus cable, and/or a PCB wiring. In this embodiment, at least one colour sensing unit may be connected to the electronic control unit by a permanent wired connection. This is particularly advantageous if the colour sensing unit is fixed at one place at the vehicle. Alternatively or additionally, the at least one colour sensing unit may be connected to the electronic control unit by a disconnectable wired connection. This is particularly advantageous if the colour sensing unit is a portable device. For example, a mobile phone or tablet computer may be connected to the electronic control unit via a USB cable or a Lightning cable.

It is an embodiment that at least one colour sensing unit is connected to the electronic control unit via a LIN (Local Interconnect Network) bus. The LIN bus gives the advantage that is implementable is a particularly cost-effective manner. In general, however, at least one colour sensing unit may be connected to the electronic control unit via another bus type, e.g. a CAN bus.

Generally, the electronic control unit may be connected to at least one colour sensing unit via a wired connection and to at least one colour sensing unit via a wireless connection.

It is an embodiment that at least one colour sensing unit is connected to the electronic control unit via a wireless data connection. This enable flexible placement of the colour sensing unit. Such an embodiment enables a particularly comfortable use of a portable device as a colour sensing unit. Another advantage is that the colour sensing unit, in particular portable device, may sense a colour point independently of the vehicle lighting apparatus and may transfer a colour point at any desired later time if the colour sensing unit is in communication range of the vehicle lighting apparatus.

It is an embodiment that at least one colour sensing unit comprises at least one colour sensor, a processor and at least one interface driver. These components may be the only electronic components of the colour sensing unit which enables a particularly cost-effective unit. The at least one interface driver may be exactly one interface driver. The at least one interface driver may comprise a bus driver, in particular a LIN driver. The processor may be a microcontroller, an ASIC, a FPGA etc. for processing and communicating. It is an advantageous embodiment that an interface driver, in particular LIN driver is integrated into the processor, in particular microcontroller. Thus, the processor may also have the functionality of an interface driver. The colour is used to sense a colour or colour point of a reference object. The sensed colour point may be read out by the processor as coordinates / values of the used colour space. The interface driver is used for communication with the electronic control unit.

It is an embodiment that the colour sensing unit further comprises a preview unit. The preview unit enables viewing light that has the same or a very similar colour as the colour of the sensed object. This bears the advantage that a user can decide if a result of sensing a colour is satisfying before setting this colour as the colour of the vehicle's interior light, in particular ambient light. To that effect, the preview unit may comprise several LEDs of different colour (e.g. comprised in one colour-variable LED module) emitting a respective mixed light which can be previewed by the user. For a particularly similar appearance to the interior light, the several LEDs are of the same basic composition and/or type as the LEDs of the at least one lighting unit.

It is an embodiment that the colour sensing unit further comprises an object illumination unit (also called "backlight unit") to illuminate the reference object. The object illumination unit advantageously enables sensing the object colour in a dark environment. Also, the object illumination unit provides homogenous optical conditions for the at least one colour sensor. This enables sensing a colour independent from external light sources and facilitates sensing an undistorted colour of the reference object. The object illumination unit may comprise one or more white LEDs.

It is an embodiment that the colour sensing unit further comprises a radio-frequency short distance communication unit. This enables a particularly easy and reliable communication with external devices like portable devices etc. For example, the colour sensing unit may directly send acquired colour data (e.g. a sensed colour point) to a mobile phone, a tablet computer etc. A user of such a mobile phone etc. may then inspect or watch the sensed colour on this device.

The radio-frequency short distance communication unit may be a Bluetooth unit, a NFC unit, a WiFi unit, etc. The radio-frequency short distance communication unit may be a respective module.

It is an embodiment that the colour point of the at least one lighting unit can be set continuously or quasi-continuously (i.e. in small steps that are indiscernible for the human eye). This embodiment gives the advantageous possibility to freely adjust the colour point. Personalization of the colour point is thus not limited to a predefined colour palette but only by the attainable colour space defined by the used LEDs of the lighting unit.

Alternatively, the colour point of the at least one lighting unit can be set to discernible colour points of a colour palette. This, however, can be performed automatically by the vehicle lighting apparatus which facilitates choosing a "best match" of a colour point. For example, the electronic control unit may receive the sensed colour point and determines the colour point of the colour palette which has the smallest distance in colour space to the sensed colour point.

It is an embodiment that a sensed colour point may be added to the colour palette. In one variant, an existing colour point can be exchanged or swapped for the sensed colour point.

The object is also achieved by a vehicle, comprising the vehicle lighting apparatus described above. The vehicle may be embodied in analogy to the vehicle lighting apparatus described above and gives the same advantages.

The object is further achieved by a method for setting a colour point of an interior light of a vehicle, wherein a colour point of a reference object is sensed and the colour point of the interior light is set to a colour point closest to the sensed colour point. The method may be embodied in analogy to the vehicle lighting apparatus described above and gives the same advantages.

The above described features and advantages of the invention as well as their kind of implementation will now be schematically described in more detail by at least one embodiment in the context of one or more figures.
- Fig.1: shows a block diagram of a vehicle lighting apparatus according to a first embodiment;
- Fig.2: shows a block diagram of a vehicle lighting apparatus according to a second embodiment; and
- Fig.3: shows a more detailed block diagram of a colour sensing unit of the vehicle lighting apparatus according to the first embodiment.

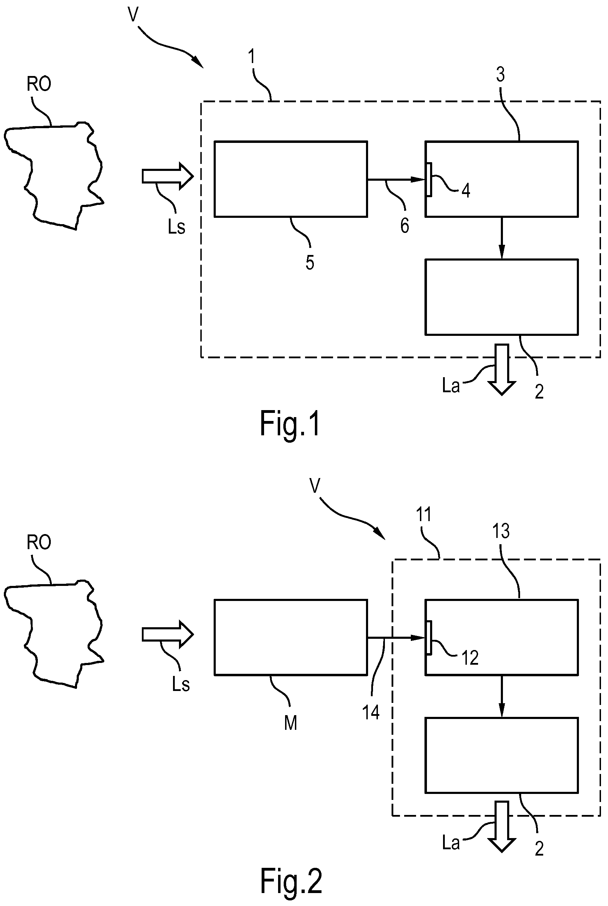

**Fig.1** shows a block diagram of a vehicle lighting apparatus 1 of a vehicle V according to a first embodiment. The vehicle V may be a passenger car, a bus, an airplane, etc.

The vehicle lighting apparatus 1 comprises a colour-tunable lighting unit 2 to light the interior of vehicle V with ambient light La of a variable colour or colour point. The vehicle lighting apparatus 1 further comprises an electronic control unit 3 to control the lighting unit 2 including setting the colour point. The electronic control unit 3 comprises an interface 4 that is connected to a colour sensing unit 5. The electronic control unit 3 is adapted to set the colour point of the lighting unit 2 according to a colour point sensed by the colour sensing unit 5 and transferred to the electronic control unit 3. The colour sensing unit 5 senses the colour point of light Ls coming from a reference object RO, e.g. clothes, nail polish etc.

In the first embodiment, the colour sensing unit 5 is attached to the vehicle V and is a part of the vehicle lighting apparatus 1. The colour sensing unit 5 is connected to the electronic control unit 3 via a LIN bus 6 with the interface 4 being a LIN interface.

Thus, using the vehicle lighting apparatus 1, a colour point of the light Ls coming from the reference object RO is sensed by the colour sensing unit 5. The colour point data is transferred to the electronic control unit 3 which sets the colour point of the interior ambient light La to a colour point closest to the sensed colour point. If the colour point of the interior ambient light La can be set continuously, the two colour points may be identical for all practical purposes. If the colour point of the interior ambient light La can only be chosen from a limited set of colour points of a colour palette, the colour point of the interior ambient light La is automatically chosen to be the colour point with the smallest distance in colour space to the sensed colour point.

Fig.2 shows a block diagram of a vehicle lighting apparatus 11 according to a second embodiment. The vehicle lighting apparatus 11 can be used with vehicle V instead or additionally to vehicle lighting apparatus 1. The vehicle lighting apparatus 11 does not integrally comprise a colour sensing unit but is connected to mobile or portable device in form of a mobile phone M. The mobile phone M is connectable to a Bluetooth interface 12 of an electronic control unit 13 via a wireless connection, e.g. a Bluetooth connection 14. The electronic control unit 13 works similar to the electronic control unit 3 but receives the sensed colour point by the Bluetooth interface 12. Thus, the electronic control unit 13 and the mobile phone M can exchange data via the wireless data connection 14 working according to a Bluetooth specification.

For example, a user of the mobile phone M - which comprises a colour sensor to detect or sense a colour point - takes a picture of the reference object RO. Then, the mobile phone M determines the colour point of the picture, of a selected area (cut-out) of the picture, or of one point (pixel) of the picture. This colour point is sent to the electronic control unit 13 via the Bluetooth interface 12. The mobile phone M may comprise an application program to perform this task. Generally, the sensing or determining of the colour point may be performed some time before it is transferred to the electronic control unit 13. For example, the picture may be chosen from a picture archive, e.g. of the mobile phone M, a data cloud etc. Alternatively, the picture, cut-out, or pixel is transferred to the electronic control unit 13 which calculates the colour point.

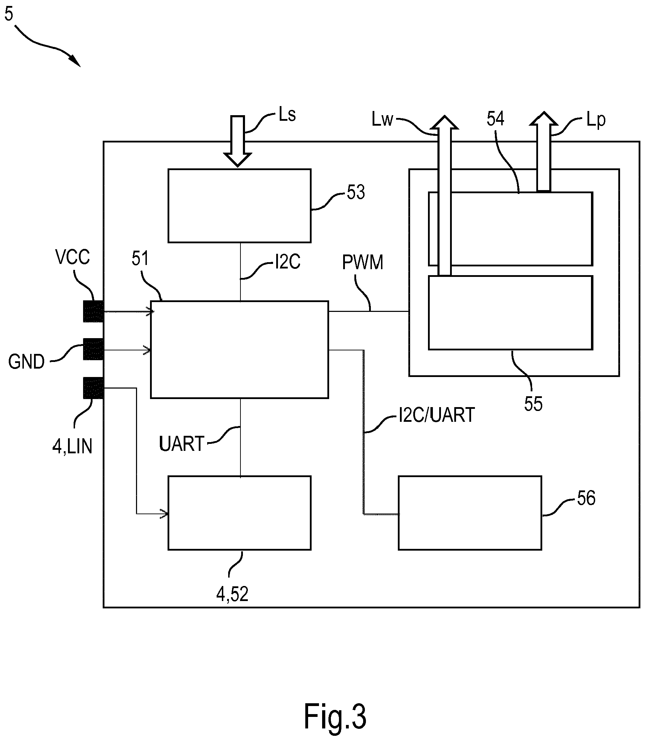

Fig.3 shows a more detailed block diagram of the colour sensing unit 5 of the vehicle lighting apparatus 1. The colour sensing unit 5 comprises two voltage terminals VCC and GND for applying a DC voltage and a LIN bus terminal LIN. The voltage terminals VCC and GND are connected to a processor in form of a microcontroller 51. The LIN bus terminal LIN is connected to a LIN driver 52. The LIN bus terminal LIN and the LIN driver 52 may form the LIN interface 4. The microcontroller 51 and the LIN driver 52 are connected by a digital serial interface, e.g. a UART interface UART. The LIN driver 52 and its functionality, resp., may be integrated into the microcontroller 51.

The colour sensing unit 5 further comprises a colour sensor 53 which is connected to the microcontroller 51 by a digital interface, e.g. an I2C interface I2C, so that the microcontroller 51 can configure the colour sensor 53 and can read out data from the colour sensor 53. As an example, the colour sensor 53 may be an RGB sensor TCS3472 available from AMS-TAOS USA Inc. It can sense RGB and clear light and its size is 2.3 x 2.5 x 0.7 mm. Its RGB colour resolution is 16 bits. Another example for the colour sensor 53 is the RGB sensor ISL29125 from Intersil Corporation. Its size is even smaller, namely 1.65 x 1.65 x 0.7 mm with the same RGB colour resolution of 16 bits.

As an optional feature, colour sensing unit 5 may comprise a preview unit in form of a preview (RGB) LED module 54. The preview LED module 54 may be placed next to the colour sensor 53. After sampling or sensing a colour point by the colour sensor 53, preview light Lp having the same colour point can immediately be emitted from the preview LED module 54 to be seen by a user. The microcontroller 51 may drive the preview LED module 54, e.g. via a PWM control connection PWM.

As another optional feature, the colour sensing unit 5 may comprise an object illumination unit in form of a white LED 55. The microcontroller 51 may drive the white LED 55, e.g. via the PWM control connection PWM, to appropriately switch the white LED 55 on and off. The white LED 55 may be placed next to the colour sensor 53 to be able to effectively illuminate the reference object RO with white light Lw while the colour sensor 53 is sensing its colour or colour point. This improves lighting conditions, in particular homogeneity, during sampling by the colour sensor 53.

The preview LED module 54 and the white LED 55 may be integrated in one colour-tunable LED module which can also emit white light. This LED module could then be used for the preview functionality and the illumination (backlight) functionality.

As yet another optional feature, the colour sensing unit 5 may comprise a radio-frequency short distance communication module in form of a Bluetooth module 56. The microcontroller 51 may be connected to the Bluetooth module 56 via, e.g., a UART interface UART or an I2C interface I2C.

The components of the colour sensing unit 5 may be placed on one common PCB.

Of course, the invention is not restricted to the described embodiments.

For example, the electronic control unit 3 may comprise at least one wired interface and at least one wireless interface.

Thus, the vehicle lighting apparatus may be a combination of the vehicle lighting apparatus to the first embodiment and the vehicle lighting apparatus according to the second embodiment.

### LIST OF REFERENCE SIGNS

- 1: Vehicle lighting apparatus
- 2: Lighting unit
- 3: Electronic control unit
- 4: Interface
- 5: Colour sensing unit
- 6: LIN bus
- 11: Vehicle lighting apparatus
- 12: Bluetooth interface
- 13: Electronic control unit
- 14: Bluetooth connection
- 51: Microcontroller
- 52: LIN driver
- 53: Colour sensor
- 54: Preview LED module
- 55: White LED
- 56: Bluetooth module
- GND: Voltage terminal
- I2C: I2C Interface
- La: Ambient light
- LIN: LIN bus terminal
- Lp: Preview light
- Ls: Light from the reference object
- Lw: White light
- M: Mobile phone
- PWM: PWM control connection
- RO: Reference object
- UART: UART interface
- V: Vehicle
- VCC: Voltage terminal

## Claims

1. A vehicle lighting apparatus (1; 11), comprising
- at least one colour-tunable lighting unit (2) to light a vehicle's interior with light (La) and
- an electronic control unit (3; 13) to control the at least one lighting unit (2) including its colour point,
wherein the electronic control unit (3; 13)
- comprises an interface (4; 12) connectable to a colour sensing unit (5; M) and
- is adapted to set the colour point of the at least one lighting unit (2) according to a colour point sensed by the colour sensing unit (5; M).

2. The vehicle lighting apparatus (1) according to claim 1 wherein at least one colour sensing unit (5) is attached to the vehicle.

3. The vehicle lighting apparatus (11) according to any of the preceding claims wherein at least one colour sensing unit (M) is a portable device.

4. The vehicle lighting apparatus (1) according to any of the preceding claims wherein at least one colour sensing unit (5) is connected to the electronic control unit (3) via a wired data connection (6).

5. The vehicle lighting apparatus (1) according to claim 4 wherein at least one colour sensing unit (5) is connected to the electronic control unit (3) via a LIN bus (6).

6. The vehicle lighting apparatus (1) according to any of the preceding claims wherein at least one colour sensing unit (M) is connected to the electronic control unit (3) via a wireless data connection (14).

7. The vehicle lighting apparatus (1) according to any of the preceding claims wherein at least one colour sensing unit (5) comprises at least one colour sensor (53), a processor (51) and an interface driver (52).

8. The vehicle lighting apparatus (1) according to claim 7 wherein at least one colour sensing unit (5) further comprises a preview unit (54) and/or an object illumination unit (55).

9. The vehicle lighting apparatus (1) according to any of the claims 7 to 8 wherein at least one colour sensing unit (5) further comprises a radio-frequency short distance communication module (56).

10. The vehicle lighting apparatus (1; 11) according to any of the claims 7 to 9 wherein the colour point of the at least one lighting unit (2) can be set continuously.

11. A vehicle (V), comprising the vehicle lighting apparatus (1; 11) according to any of the preceding claims.

12. A method for setting a colour point of an interior light (La) of a vehicle (V), wherein
- a colour point of a reference object (RO) is sensed and
- the colour point of the interior light (La) is set to a colour point closest to the sensed colour point.
